# EUROPEAN PATENT SPECIFICATION

(11) **EP 3 992 082 B1**
(45) Date of publication and mention of the grant of the patent: **26.06.2024**
(21) Application number: 21200622.5
(22) Date of filing: 04.10.2021
(51) Int. Cl.: B64D 13/02, F02C 6/06, F02C 7/20, F02C 7/32

(54) **GAS TURBINE ENGINE WITH CABIN BLOWER SYSTEM**
GASTURBINENMOTOR MIT KABINENGEBLÄSESYSTEM
TURBINE À GAZ COMPRENANT UN SYSTÈME DE VENTILATEUR DE CABINE

(30) Priority: 03.11.2020 GB 202017401
(43) Date of publication of application: 04.05.2022
(73) Proprietor: Rolls-Royce plc, London N1 9FX (GB)
(72) Inventor: Stretton, Richard, Derby, DE24 8BJ (GB)
(74) Representative: Rolls-Royce plc

(56) References cited:
- EP-A1- 2 944 767
- EP-A1- 3 219 937
- EP-A2- 2 065 585
- US-A1- 2018 022 459
- US-A1- 2018 266 329

## Description

### Field of the disclosure

The present invention relates generally to gas turbine engines and more particularly to a cabin blower system arrangement for providing pressurised air to a cabin of an aircraft.

### Description of the related art

Gas turbine engines include cabin blower systems for pressurising the cabin of an aircraft. Cabin blower systems provide an airflow to cabins of aircrafts at a controlled temperature and pressure for ventilation. The pressurised air from the cabin blower can also be used for other aircraft functions e.g. wing anti-icing, fuel tank inerting, cargo heating, and other aircraft systems pressurisation (e.g. hydraulic and potable water).

Known cabin blower systems include a cabin blower typically driven by a compressor, which in turn is driven by a shaft of the gas turbine engine via an accessory gearbox. As it is not desirable for the compressor of the cabin blower to rotate at a speed determined by the particular operating point of the gas turbine at any particular moment, the cabin blower system normally includes a variable drive system to vary the compressor speed and keep the cabin airflow and pressure within acceptable limits.

The accessory gearbox is arranged in a core zone, or engine accessory bay, defined between the engine core casings and the nacelle inner structure and pylon structure for supporting the engine. As other systems, such as engine specific fuel, oil, electrical and air systems, along with aircraft specific electrical, hydraulic, pneumatic and fire extinguishing systems, are core mounted and arranged in the core zone, limited space is normally available for the cabin blower system installation. Moreover, as the variable drive system includes several components, such as electrical motors/generators and a summing gearbox, and may be integrated with the cabin blower into a single combined unit, known cabin blower systems are bulky and present several installation and integration challenges.

There is therefore a need for a cabin blower system with improved installation and integration capabilities.

United States Patent Application Publication US 2018/266329 A1 relates to a hybrid drive system for transferring power from a gas turbine engine of an aircraft. The hybrid drive system includes a planetary gear set, a first motor-generator, and a second motor-generator. The planetary gear set includes a first member, a second member, and a third member. The first member is operatively coupled to the second member and the third member. The first member is operatively coupled to and transmits power from a shaft of the gas turbine engine. The first motor-generator is drivingly coupled to the third member. The second motor-generator includes an output and is drivingly coupled to the second motor-generator by the second member and the third member. The hybrid drive system is configured to transfer the power from the shaft to the output of the second motor-generator.

European Patent Application Publication EP 3219937 A1 relates to an aircraft engine bleed system with a turbo-compressor. An engine bleed tap is coupled to a fan-air source or a compressor source of a lower pressure compressor section before a highest pressure compressor section of a gas turbine engine and a turbo-compressor is in fluid communication with the engine bleed tap. A controller is operable to selectively drive the turbo-compressor to boost a bleed air pressure as pressure augmented bleed air and control delivery of the pressure augmented bleed air to an aircraft use.

### Summary

The scope of protection is defined by the appended claims.

According to a first aspect, there is provided a gas turbine engine comprising: an engine core comprising a compressor, a combustor, a turbine, and a core shaft connecting the turbine to the compressor; a fan located upstream of the engine core, the fan comprising a plurality of fan blades; a bifurcation spanning a bypass duct defined between the engine core and a nacelle surrounding the gas turbine engine, the bifurcation comprising aerodynamically shaped fairings defining an interior space therebetween. The gas turbine engine of the first aspect further comprises a mechanical power offtake; and a cabin blower system configured to be driven by the mechanical power offtake and comprising: a cabin blower compressor configured to receive air from the engine through an air inlet, compress the air and output the compressed air through an air outlet; an electric variator comprising a first electrical machine, a second electrical machine, and a power management system electrically interconnecting the first and second electrical machines and controlling whether each of the first and second electrical machines operates as a motor or a generator ; and a differential gearbox having a first input mechanically connected to the mechanical power offtake and to a shaft of the first electrical machine, a second input mechanically connected to a shaft of the second electrical machine, and an output to drive the cabin blower compressor.

According to the disclosure, the cabin blower system is arranged in the interior space of the bifurcation. The gas turbine engine further comprises a heat exchanger arranged in the interior space of the bifurcation to cool the electric variator (104)

In the present disclosure, upstream and downstream are with respect to the air flow through the compressor, and front and rear is with respect to the gas turbine engine, i.e. the fan being in the front and the turbine being in the rear of the engine. As used herein, forward refers to the direction from the rear to the front of the gas turbine engine.

According to the disclosure, the cabin blower system is arranged within the bifurcation, and not in the engine core accessory bay, as in the prior art engines. This allows for many advantages.

Firstly, locating the cabin blower system within the upper bifurcation simplifies the cabin blower system installation, as the bifurcation provides for more space than the engine core accessory bay. Moreover, the space within the bifurcation is more easily accessible than the space available in the engine core accessory bay, which normally is very restricted due to the number of aircraft systems installed.

Moreover, locating the cabin blower system within the bifurcation has advantages in terms of heat management as the interior space of the bifurcation is cooler than the engine accessory bay.

A further advantage is engine mounted aircraft systems can also be relocated with the cabin blower. For example the aircraft hydraulic system installation would benefit from being relocated to the upper bifurcation. There would be advantages in terms of weight from shorter, more direct hydraulic routing, as the cabin blower system is arranged closer to the airframe. And the hydraulic pumps would be located in a cooler environment (in the case of a core front mount, the units can be mounted radially externally to the pylon primary structure, outside of the main core accessory bay; in the case of a fancase mount pylon the units could be mounted radially internally to the pylon primary structure, with suitable shielding, or encased in a separate zone, in order to shield the units from the harsh engine core environment). E.g. a zone enclosed at the top by the fancase mount pylon floor, at the sides by the vertical walls of the bifurcation, at the base by the introduction of an additional floor panel to seal against the bifurcation side walls, and front and rear, either by the existing splitter nose, or by additional vertical panels; thereby creating a separate accessory bay outside of the main core zone. Moreover a shorter main engine accessory gearbox (AGB) can be used, with no hydraulic pumps and no need to route the hydraulic lines around the engine core, both of which free more space for engine core dressings and engine maintenance activities, and save weight.

The gas turbine engine may further comprise fan outlet guide vanes arranged downstream of the fan, and the bifurcation may be arranged downstream of the outlet guide vanes, or integrated therewith. In other words, the bifurcation may be formed at least in part by a fan outlet guide vane spanning the bypass duct. The gas turbine engine may comprise a plurality of fan outlet guide vanes circumferentially arranged about the core engine and extending radially across the bypass duct.

The bifurcation may be located at top (top dead centre) of the core engine when mounted to the airframe. In other words, the bifurcation may be an upper bifurcation and may be located at 12 o'clock when seen from the front of the engine in a conventional underwing installation. Alternatively, the bifurcation may be a lower bifurcation and may be located at 6 o'clock (bottom dead centre) when seen from the front of the engine in an overwing installation. In further alternative embodiments the bifurcation may be located at 3 o'clock or 9 o'clock in rear fuselage installation.

The bifurcation may have a leading edge, a trailing edge, and two axial sides extending between the leading edge and the trailing edge and defining the aerodynamically shaped fairings.

The gas turbine engine may be an engine core front mounted gas turbine engine, or a fan case front mounted gas turbine engine.

The gas turbine engine may further comprise a pylon for mounting the gas turbine engine to the airframe, the pylon extending across the interior space of the bifurcation.

The cabin blower system may be supported by the pylon.

The gas turbine engine comprises a mechanical power offtake configured to drive the cabin blower system, and the mechanical power offtake may be arranged on either the port or starboard side of the engine in a range of +/-45°, for example +/-30°, or +/-15°of top dead centre (in underwing installation), or bottom dead centre (in overwing installation), or 3 o'clock or 9 o'clock (in rear fuselage installation) of the engine core.

The mechanical power offtake may comprise a shaft. The shaft may be connected to, and driven by, the core shaft.

The gas turbine engine may comprise a main engine accessory gearbox and the shaft of the mechanical power offtake may be connected to, and driven by, the main engine accessory gearbox.

The shaft may be directly connected to the cabin blower system to drive the cabin blower through the differential gearbox. Alternatively, the shaft may provide an input to a step-aside gearbox that outputs drive to a transfer shaft, which in turn drives the cabin blower through the differential gearbox. The step-aside gearbox may be an angled drive gearbox. Alternatively the shaft may be a power offtake from the main engine accessory gearbox.

A simple drive disconnect (e.g. spline or bolted arrangement) would then allow the gearbox, cabin blower, and any aircraft systems to remain with the pylon during engine installation and removal; allowing all the aircraft systems and connections to remain in situ, thereby simplifying and reducing the time for engine installation and removal.

The heat exchanger may include a surface cooler arranged on the bifurcation fairings, so as to be washed by a bypass airflow flowing in the bypass duct. As the bypass airflow has a relatively low temperature, the heat exchanger may allow for effective cooling of the electric variator.

The surface cooler may be arranged on one of the two axial sides of the bifurcation. The surface cooler may be arranged closer to the leading edge than the trailing edge of the upper bifurcation.

Alternatively, the heat exchanger may be a matrix heat exchanger. The matrix heat exchanger may be utilised for cooling the electric variator, either with a dedicated fan air cooling offtake, or sharing the fan air offtake for the cabin blower.

The bifurcation fairings may comprise an aperture to supply fan bypass air to the cabin blower. The aperture may define a fan air offtake for the cabin blower. Such a fan air offtake may be a side scoop or forward facing offtake.

According to an embodiment of the disclosure, the gas turbine engine may further comprise an airframe mounted accessory drive (AMAD) arranged in the interior space of the bifurcation, and the cabin blower system may be connected to, and driven by, the airframe mounted accessory drive.

Airframe hydraulic pumps may also be located within the bifurcation and driven from the same airframe mounted accessory drive.

The gas turbine engine may further comprise a pylon mounted gearbox (PMG) arranged in the interior space of the upper bifurcation, the cabin blower system being connected to, and driven by, the pylon mounted gearbox.

The pylon mounted gearbox may be located radially externally to the pylon outside of a main core engine accessory bay, for example in a core front mount arrangement. Alternatively, the pylon mounted gearbox may be located radially internally to the pylon outside of a main core engine accessory bay, for example in a fan case front mount arrangement.

The pylon mounted gearbox may be encased and shielded from the main core engine accessory bay.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox.

According to an aspect, there is provided an aircraft comprising a gas turbine engine as described and/or claimed herein. The aircraft according to this aspect is the aircraft for which the gas turbine engine has been designed to be attached.

The skilled person will appreciate that except where mutually exclusive, any feature described herein may be applied to and/or combined with any other feature described herein.

### Brief description of the drawings

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is schematic diagram of a cabin blower system;
**Figure 5** is a schematic sectional side view of a gas turbine engine showing a first embodiment of the disclosure;
**Figure 6** is a schematic sectional top view in the direction of arrow A of figure 5 of an upper bifurcation;
**Figure 7** is a schematic sectional side view of a gas turbine engine showing a second embodiment of the disclosure; and
**Figure 8** is a schematic sectional side view of a gas turbine engine showing a further embodiment of the disclosure.

### Detailed description of the disclosure

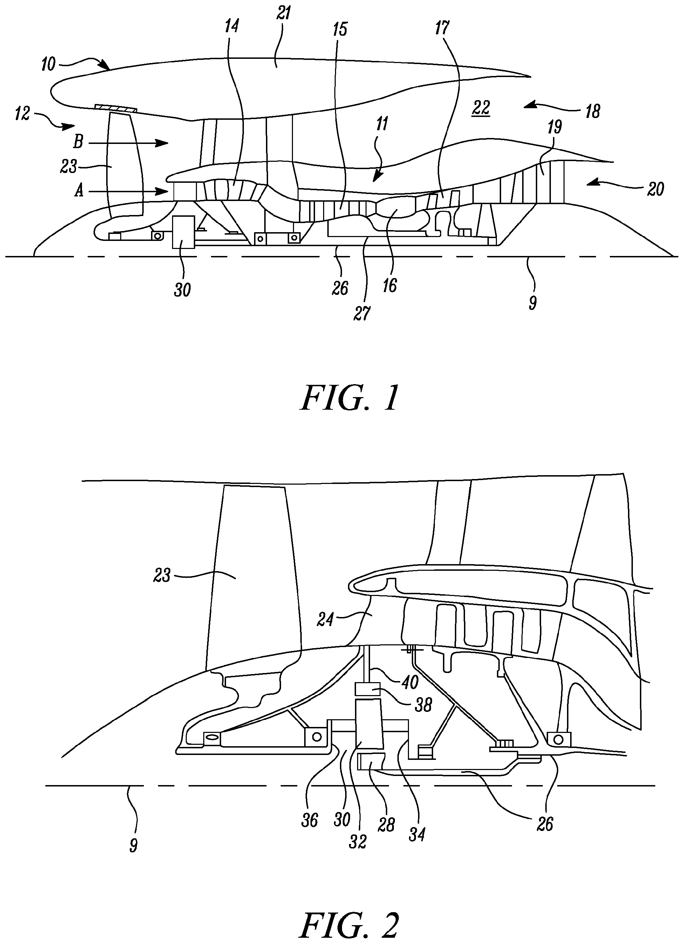

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a core shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the core shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the core shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

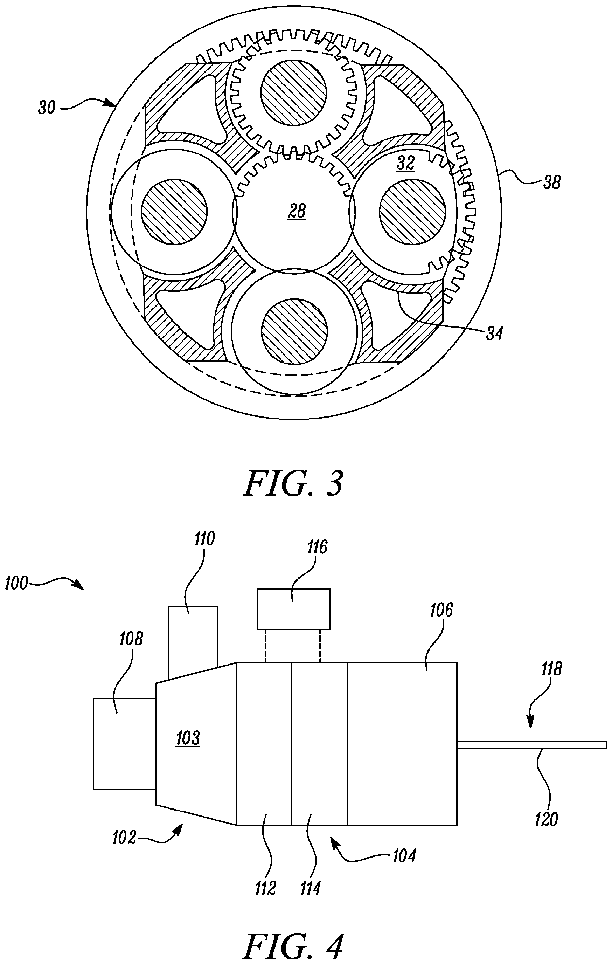

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input, core shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Figure 4 illustrates an exemplary cabin blower system 100 suitable to be mounted within an upper bifurcation 50 of the gas turbine engine 10 as explained in detail hereafter.

The cabin blower system 100 includes a cabin blower 102, an electric variator 104, and a differential gearbox 106.

The cabin blower 102 comprises a compressor 103, an air inlet 108 and an air outlet 110. Air from the engine, for example at least in part from the bypass duct of the engine, is fed to the compressor 103 of the cabin blower 102 through the air inlet 108, compressed by the compressor 103, which in turn feeds the compressed air to the cabin of the aircraft via the air outlet 110. The compressor 103 may be a blower, or an impeller, or a pair of impellers.

The electrical variator 104 includes a first electrical machine 112, a second electrical machine 114, and a power management system 116.

The first and second electrical machines 112, 114 are each configured to work as electric motor and/or power generators. The power management system 116 interconnects the first and second electrical machines 112, 114 and controls whether each of the first and second electrical machines 112, 114 work as electric motor or power generator to drive the cabin blower 102 within specific operating conditions regardless the operating point of the gas turbine engine.

It will be understood, however, that the disclosure is not limited to the described cabin blower system and any type and arrangement of cabin blower system has general applicability to the gas turbine engine of the disclosure. For example, the cabin blower system may be a single combined unit as illustrated, or the constituent parts could be distributed around the gearbox assembly.

The cabin blower system 100 is driven by a transfer shaft 120 of a mechanical power offtake 118. The transfer shaft 120 may connect the differential gearbox 106 and the first electrical machine 112, and may be seen as a first input of the differential gearbox 106. The differential gearbox 106 may comprise a second input, in the form of an additional shaft connected to the second electrical machine 114, not illustrated for sake of simplicity. The differential gearbox further comprises an output to drive the compressor 103 of the cabin blower 102, not illustrated for sake of simplicity.

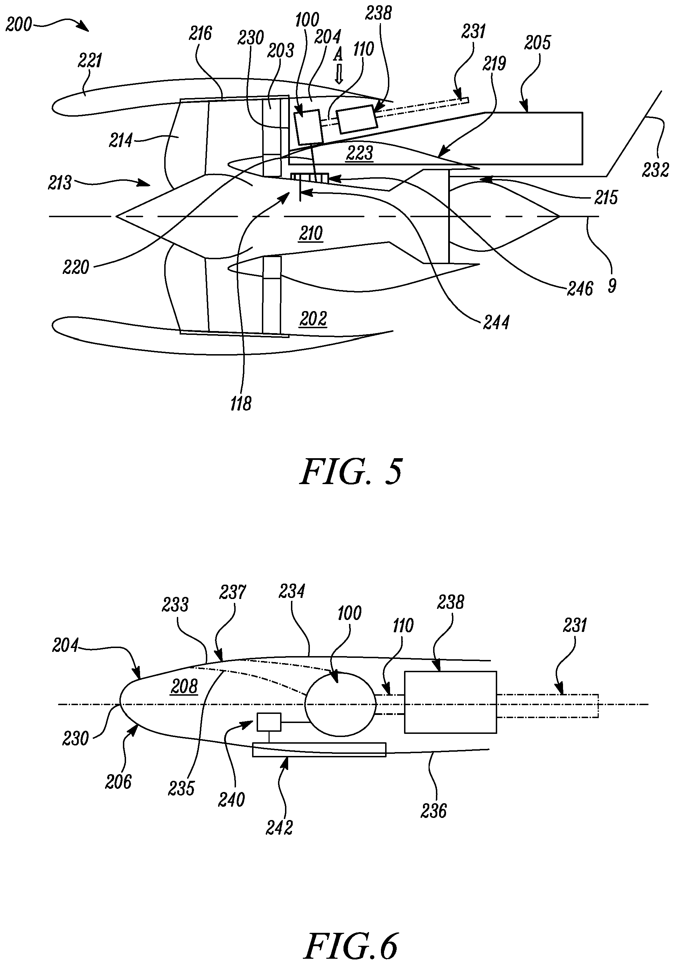

The transfer shaft 120, as will be described in more detail with reference to figures 5, 7 and 8, is connected to, and driven by, either directly or indirectly via a gearbox, for example a step-aside gearbox, a suitable engine core shaft, such as for example the core shaft 26, or the interconnecting shaft 27 of the two-shaft engine arrangement shown in figures 1-3. It should be noted that the present disclosure may be applied to gas turbine engines with different arrangements, for example ungeared gas turbine engines with three shafts, respectively connecting a low pressure, an intermediate pressure, and a high pressure compressor to a low pressure, an intermediate pressure, and a high pressure turbine. Either of the three shafts may be used to drive the mechanical power offtake 118.

Figure 5 illustrates an embodiment of a gas turbine engine 200 according to the disclosure. The gas turbine engine 200 comprises a propulsive fan 213 with a plurality of fan blades 214, a fan case 216 surrounding the fan 213, an engine core 210 with one or more compressors, one or more turbines, and interconnecting shaft(s) (not shown for sake of simplicity), and an exhaust nozzle 215. The engine core 210 is housed in an engine core casing 223 with an outer casing wall 219. A nacelle 221 surrounds the engine core casing 223 and defines the core accessory bay or core zone. The nacelle 221 with the outer casing wall 219 also defines a bypass duct 202.

Fan outlet guide vanes (FOGVs) 203 are arranged downstream of the fan 213 in the bypass duct 202. Downstream of the FOGVs there is arranged an upper bifurcation, or splitter, 204 that extends between the engine core 210 and the nacelle 221. In an alternative embodiment not illustrated, the upper bifurcation 204 may be formed at least in part by an FOGV 203 spanning the bypass duct 202, and integrated therewith.

The upper bifurcation 204 completely spans the bypass duct 202.

The upper bifurcation 204 is located at top of the engine 200 when underwing mounted. The upper bifurcation 204 may be described as being located/aligned top dead centre of the gas turbine engine 200 or the engine core 210 of the gas turbine engine 200.

The engine 200 may further comprise a non-illustrated lower bifurcation, or splitter, arranged diametrically opposite the upper bifurcation 204 and located at bottom of the engine when wing mounted.

As illustrated in figure 6, the upper bifurcation 204 comprises aerodynamically shaped fairings 206 defining an interior space 208 therebetween. The upper bifurcation 204 has an aerofoil shape and comprises a leading edge 230 on a splitter nose, a trailing edge 232 (visible in figure 5), and two axial side walls 234, 236 extending between the leading edge 230 and the trailing edge 232. In other words, the two axial side walls 234, 236 define the aerodynamically shaped fairings 206 and the interior space 208. The fairings 206 define an external surface of the upper bifurcation 204 that is washed by the bypass airflow in use.

On the fairings 206, for example on one of the two axial side walls 234 there is achieved an aperture 233 to fluidly connect the cabin blower air inlet 108 and the bypass duct 202. The aperture 233 defines a flush fan air offtake 237 on the side wall 234, as illustrated, for the cabin blower 102. In alternative embodiments, the fan air offtake 237 may be a forward facing scoop on the splitter nose, or a forward facing scoop protruding from the side walls 234 or 236 into the fan stream.

A duct 235, represented in dotted line in figure 6, fluidly connects the aperture 233 to the cabin blower system 100, in particular to the compressor 103.

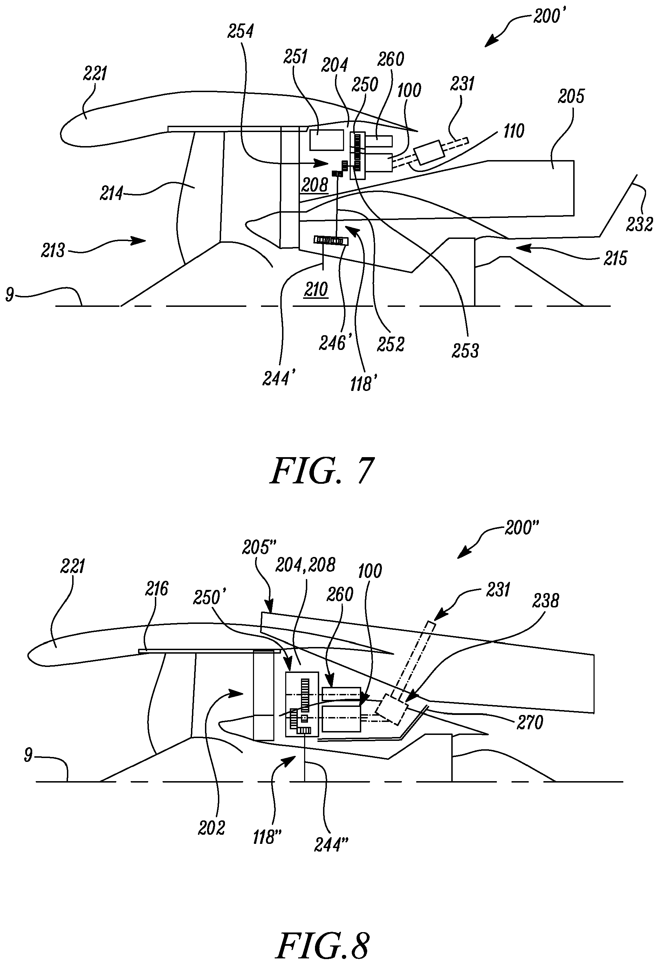

The gas turbine engine 200 is mounted to an airframe, e.g. under a wing, or to a fuselage, by a mounting pylon 205. The pylon 205 traverses the bypass duct 202 and connects the engine core 210 to the airframe, in the so-called core front mount arrangement. In figure 8, there is illustrated an embodiment where the pylon connects the fan casing 216 to the airframe, in the so-called fan case front mount arrangement.

The pylon 205 is arranged within the upper bifurcation 204 in the interior space 208, and is encased by the fairings 206. According to the disclosure, also the cabin blower system 100 is arranged within the upper bifurcation 204 in the interior space 208. Advantageously, the pylon 205 may support the cabin blower system 100, as shown in figure 5. Electrical connections, fuel/hydraulic lines, communication links, and service pipes (not illustrated) may also be arranged within the upper bifurcation 204 along with the cabin blower system 100 and the pylon 205.

Additionally, provision for a precooler 238 is also shown arranged within the upper bifurcation 204 in the embodiment of figure 6. The precooler may not be required if the cabin blower outlet temperature is within the airframe temperature requirements. If required, the precooler 238 is used to cool high pressure hot bleed air from the air outlet 110 of the compressor 103 of the cabin blower system 100. Once the temperature has been lowered, the bleed air from the cabin blower system 100 is fed to the aircraft cabin via an outlet duct 231. The fan air offtake 237 may feed the precooler 238 along with the cabin blower 100. Alternatively, a separate fan air offtake (not illustrated) may feed the precooler 238 only.

In some applications, the precooler 238 may not be necessary and may be omitted.

A heat exchanger 240 is also provided for cooling the cabin blower system 100, in particular for cooling oil used to lubricate and cool the cabin blower system 100, in particular the electric variator 104 and the summing gearbox 106. The heat exchanger 240 includes a surface cooler 242 arranged on one of the two axial sides 234 of the upper bifurcation 204. In other words the surface cooler 242 is arranged on the fairings 206 and may be seen as defining a portion of the external surface of the upper bifurcation 204. In use the surface cooler 242 is washed by the bypass airflow to provide oil cooling for the cabin blower system 100. The surface cooler 242 may be designed to provide sufficient cooling just for the cabin blower system 100 or in addition to other components and/or systems of the engine, such as for example an aircraft electrical generator.

It should be noted that having the heat exchanger 240 in the upper bifurcation 204 and therefore particularly close to the heat source (the cabin blower system 100) allows for improved cooling efficiency and simplified cooling circuits, installation, and maintenance.

The cabin blower system 100 is driven by the mechanical power offtake 118 of the core engine 210. In the embodiment illustrated in figure 5, the mechanical power offtake 118 includes an offtake shaft 244, a step-aside gearbox 246, and the transfer shaft 220.

The offtake shaft 244 is connected to, and driven by, the core shaft 26, or the interconnecting shaft 27 of the engine core 210; or where the gas turbine engine has a different architecture with a different number of shafts, for example one or three shafts, the offtake shaft 244 is connected to, and driven by, said one shaft or one of said three shafts. The offtake shaft 244 could also be from a conventional core mounted engine accessory gearbox.

The offtake shaft 244 is arranged in a range of +/-45°, for example +/-30°, or +/-15°, or +/-10°of top dead centre of the engine core 210, when in use. The closer the offtake shaft 244 is arranged to the top dead centre of the engine core 210, the shorter, and therefore lighter, the same offtake shaft 244 and/or transfer shaft 220 is/are.

Ideally, if installation allows, the offtake shaft 244 is arranged at top dead centre of the engine core 210 as this would allow the offtake shaft 244 to be as close as possible to the cabin blower system 100. It also provisions for a simple (e.g. bolted or splined interface) for ease of vertical engine installation and removal.

The offtake shaft 244 provides an input to the step-aside gearbox 246, which in turn outputs drive to the transfer shaft 220. The step-aside gearbox 246 provides a suitable gear ratio between the core shaft 244 and the transfer shaft 220 to ultimately drive the summing gearbox 106, and therefore the compressor 103, within acceptable speed limits.

Moreover the step-aside gearbox 246 may be an angled drive gearbox to allow connecting the offtake shaft 244 and the transfer shaft 220 when arranged on different axes.

In alternative, not illustrated embodiments the step-aside gearbox 246 may be replaced by a power offtake shaft from a conventional accessory gearbox, running in a direction tangentially around the core casing, towards a bevel gearset at 12 o'clock to then transfer the drive vertically upwards towards the cabin blower system.

If required by the engine geometry, the mechanical power offtake 118 may comprise a different number of shafts to connect the engine core 210 to the cabin blower system 100. For example, two or more transfer shafts 220, for example arranged in series, may be provided. Consequently, additional gearbox and/or gears may be provided to connect the two or more transfer shafts 220.

In a non-illustrated embodiment, the offtake shaft 244 is arranged at the top dead centre of the engine core 210, and the step-aside gearbox 246 and the transfer shaft 220 are omitted. In such embodiment, the offtake shaft 244 directly connects to the summing gearbox 106 to drive the cabin blower system 100.

The transfer shaft 220 (and the offtake shaft 244 in the embodiment wherein the transfer shaft 220 is omitted) is at least in part arranged within, and encased by, the upper bifurcation 204. In other words, the transfer shaft 220 (and the offtake shaft 244 in the embodiment wherein the transfer shaft 220 is omitted), crosses the engine core casing 223 through a suitable aperture and is housed, at least in part, in the interior space 208 of the upper bifurcation 204.

The transfer shaft 220 may also be configured with suitable joints to allow articulation of the shaft over its length, in order to accommodate any thermal or mechanical deflections and build tolerances in the system.

Figure 7 illustrates a further embodiment of gas turbine engine 200' according to the disclosure, which mainly differs from the gas turbine engine 200 of figure 5 in that the gas turbine engine 200' comprises a Pylon Mounted Gearbox (PMG) 250 arranged in the interior space 208 of the upper bifurcation 204.

Like features between figures 5 and 7 are given like reference numerals, and will not be described again in relation to figure 7, whereas similar reference numeral are used for similar features as those illustrated in figure 5, but with a suffix " ' ". Mainly the differences between the embodiment of figure 7 and the embodiment of figure 5 will be described.

The gas turbine engine 200' includes a cabin blower system 100 connected to, and driven by, the PMG 250. Additionally, airframe electrical generator(s) 251 and Airframe hydraulic pump(s) 260 are also part of the PMG 250. The PMG 250 can be configured, depending on available space to accommodate the cabin blower with any combination of the airframe hydraulic, and electrical systems.

The PMG 250 is located radially externally to the pylon 205 outside of a main core engine accessory bay. The cabin blower system 100, the airframe electrical generator(s) 251 and Airframe hydraulic pump(s) 260 are also arranged radially externally to the pylon 205 outside of the main core engine accessory bay.

The PMG 250 is connected to, and driven by, a mechanical power offtake 118' comprising an offtake shaft 244', a step-aside gearbox 246', a first transfer shaft 252 and a second transfer shaft 253 connected to, and driven by, the first transfer shaft 252 by means of gears 254, for example bevel gears, which allow the first transfer shaft 252 and the second transfer shaft 253 to be connected even if arranged on different axes.

In detail, the offtake shaft 244' is driven by a shaft of the engine core. The step-aside gearbox 246' receives an input from the offtake shaft 244' and provides an output to the first transfer shaft 252. The first transfer shaft 252 is then connected to the second transfer shaft 253 by means of the gears 254. The step-aside gearbox 246' and the gears 254 provide a suitable overall gear ratio between the core shaft 244' and the second transfer shaft 253 to ultimately drive the PMG 250 within acceptable speed limits.

Airframe hydraulic pumps 260 may also be present within the upper bifurcation and connected to the PMG 250.

Figure 8 illustrates a further embodiment of gas turbine engine 200" according to the disclosure, which mainly differs from the gas turbine engine 200 and 200' of figure 5 and 7 in that the gas turbine engine 200" features the so-called fan case front mount arrangement.

Like features between figures 5, 7, and 8 are given like reference numerals, and will not be described again in relation to figure 8, whereas similar reference numeral are used for similar features as those illustrated in figure 5 and 7, but with a suffix " " ". Mainly the differences between the embodiment of figure 8 and the embodiments of figures 5 and 7 will be described.

The gas turbine 200" is adapted to be mounted to an airframe (under a wing, in the illustrated embodiment) by a mounting pylon 205". The pylon 205 traverses the bypass duct 202 and connects the fan case 216 to the airframe.

The gas turbine engine 200" includes a cabin blower system 100 connected to, and driven by, a pylon mounted gearbox (PMG) 250'. Airframe hydraulic pump(s) 260 are also connected to, and driven by, the pylon mounted gearbox 250'. The PMG 250' is driven by a shaft 244" of a mechanical power offtake 118". The shaft 244" is arranged at 12 o'clock and is connected to, and drives, the PMG 250'.

The cabin blower system 100, the PMG 250', and the airframe hydraulic pumps(s) 260 are arranged in the interior space 208 of the upper bifurcation 204, radially internally to the mounting pylon 205".

Additionally, provision for a precooler 238 is also shown arranged within the upper bifurcation 204 to cool high pressure hot bleed air from the cabin blower system 100. Once the temperature has been lowered, the bleed air from the cabin blower system 100 is fed to the aircraft cabin via the outlet duct 231. In some application, where the cabin blower outlet temperature is within the airframe temperature requirements, the precooler 238 may not be necessary and may be omitted.

The gas turbine engine 200" further comprises a pylon mounted fire wall 270, which creates a separate zone for the cabin blower system 100, the airframe hydraulic pumps(s) 260, and other not illustrated aircraft systems.

## Claims

1. A gas turbine engine (200, 200', 200") for mounting to an airframe of an aircraft, comprising:
an engine core (210) comprising a compressor, a combustor, a turbine, and a core shaft connecting the turbine to the compressor;
a fan (213) located upstream of the engine core, the fan comprising a plurality of fan blades (214);
a bifurcation (204) spanning a bypass duct (202) defined between the engine core and a nacelle (221) surrounding the gas turbine engine, the bifurcation comprising aerodynamically shaped fairings (206) defining an interior space (208) therebetween;
a mechanical power offtake (118); and
a cabin blower system (100) configured to be driven by the mechanical power offtake (118, 118', 118") and comprising:
a cabin blower compressor (103) configured to receive air from the engine through an air inlet (108), compress the air and output the compressed air through an air outlet (110);
an electric variator (104) comprising a first electrical machine (112), a second electrical machine (114), and a power management system (116) electrically interconnecting the first and second electrical machines and controlling whether each of the first and second electrical machines operates as a motor or a generator; and
a differential gearbox (106) having a first input mechanically connected to the mechanical power offtake (118) and to a shaft of the first electrical machine (112), a second input mechanically connected to a shaft of the second electrical machine (114), and an output to drive the cabin blower compressor (103);
wherein the cabin blower system (100) is arranged in the interior space (208) of the bifurcation (204), and the gas turbine engine further comprises a heat exchanger (240) arranged in the interior space (208) of the bifurcation (204) to cool the electric variator (104).

2. The gas turbine engine (200, 200', 200") of claim 1, further comprising fan outlet guide vanes (203) arranged downstream of the fan (213), wherein the bifurcation (204) is arranged downstream of the outlet guide vanes, or is integrated therewith.

3. The gas turbine engine (200, 200', 200") of any one of the preceding claims, wherein the bifurcation (204) is located at top of the core engine (210) when mounted to the airframe.

4. The gas turbine engine (200, 200', 200") of any one of the preceding claims, wherein the gas turbine engine is an engine core front mounted gas turbine engine, or a fan case front mounted gas turbine engine, and wherein the gas turbine engine further comprises a pylon (205) for mounting the gas turbine engine to the airframe, the pylon extending across the interior space (208) of the bifurcation (204).

5. The gas turbine engine (200, 200', 200") of claim 4, wherein the cabin blower system (100) is supported by the pylon (205).

6. The gas turbine engine (200, 200', 200") of any one of the preceding claims, wherein the mechanical power offtake (118) is arranged in a range of +/-45°, for example +/-30°, of top dead centre, or bottom dead centre, or 3 o'clock, or 9 o'clock of the engine core (210).

7. The gas turbine engine (200, 200', 200") of claim 6, further comprising a main engine accessory gearbox, the mechanical power offtake (118) comprising a shaft (120) connected to, and driven by, the main accessory gearbox.

8. The gas turbine engine (200, 200', 200") of any one of the preceding claims, wherein the heat exchanger (240) includes a surface cooler (242) arranged on the bifurcation fairings (206), so as to be washed by a bypass airflow flowing in the bypass duct (202).

9. The gas turbine engine (200, 200', 200") of any one of the preceding claims, wherein the bifurcation fairings (206) comprise an aperture (237) to supply fan bypass air to the cabin blower (103).

10. The gas turbine engine (200, 200', 200") of any one of the preceding claims, further comprising a pylon mounted gearbox, PMG (250), arranged in the interior space (208) of the bifurcation (204), the cabin blower system (100) being connected to, and driven by, the pylon mounted gearbox.

11. The gas turbine engine (200, 200', 200") of claim 10, when depending on claim 4, wherein:
the pylon mounted gearbox (250) is located radially externally to the pylon (205) outside of a main core engine accessory bay; or
the pylon mounted gearbox (250) is located radially internally to the pylon (205) outside of a main core engine accessory bay.

12. The gas turbine engine (200, 200', 200") of claim 11, wherein the pylon mounted gearbox (250) is located radially internally to the pylon (205) outside of a main core engine accessory bay, and wherein the pylon mounted gearbox is encased and shielded from the main core engine accessory bay.

13. An aircraft comprising a gas turbine engine (200, 200', 200") according to any one of the preceding claims.

## Patentansprüche

1. Gasturbinentriebwerk (200, 200', 200") zum Montieren an einer Flugzeugzelle eines Luftfahrzeugs, umfassend:
einen Triebwerkskern (210), der einen Verdichter, einen Verbrenner, eine Turbine und eine Kernwelle umfasst, welche die Turbine mit dem Verdichter verbindet;
einen Lüfter (213), der sich stromaufwärts des Triebwerkskerns befindet, wobei der Lüfter eine Vielzahl von Lüfterblättern (214) umfasst;
eine Gabelung (204), die einen Umgehungskanal (202) überspannt, der zwischen dem Triebwerkskern und einer das Gasturbinentriebwerk umgebenden Gondel (221) definiert ist, wobei die Gabelung aerodynamisch geformte Verkleidungen (206) umfasst, die einen Innenraum (208) dazwischen definieren;
einen mechanischen Leistungsabnehmer (118); und
ein Kabinengebläsesystem (100), das dazu konfiguriert ist, durch den mechanischen Leistungsabnehmer (118, 118', 118") angetrieben zu werden, und Folgendes umfassend:
einen Kabinengebläseverdichter (103), der dazu konfiguriert ist, Luft von dem Triebwerk durch einen Lufteinlass (108) aufzunehmen, die Luft zu verdichten und die verdichtete Luft durch einen Luftauslass (110) auszugeben;
einen elektrischen Variator (104), der eine erste elektrische Maschine (112), eine zweite elektrische Maschine (114) und ein Leistungsverwaltungssystem (116) umfasst, das die erste und zweite elektrische Maschine elektrisch miteinander verbindet und steuert, ob jede von der ersten und zweiten elektrischen Maschine als Motor oder als Generator betrieben wird; und
ein Differentialgetriebe (106), das einen ersten Eingang, der mechanisch mit dem mechanischen Leistungsabnehmer (118) und mit einer Welle der ersten elektrischen Maschine (112) verbunden ist, einen zweiten Eingang, der mechanisch mit einer Welle der zweiten elektrischen Maschine (114) verbunden ist, und einen Ausgang zum Antreiben des Kabinengebläseverdichters (103) aufweist;
wobei das Kabinengebläsesystem (100) in dem Innenraum (208) der Gabelung (204) angeordnet ist und das Gasturbinentriebwerk ferner einen Wärmetauscher (240) umfasst, der in dem Innenraum (208) der Gabelung (204) angeordnet ist, um den elektrischen Variator (104) zu kühlen.

2. Gasturbinentriebwerk (200, 200', 200") nach Anspruch 1, ferner umfassend stromabwärts des Lüfters (213) angeordnete Lüfterauslassleitschaufeln (203), wobei die Gabelung (204) stromabwärts der Auslassleitschaufeln angeordnet oder in diese integriert ist.

3. Gasturbinentriebwerk (200, 200', 200") nach einem der vorhergehenden Ansprüche, wobei sich die Gabelung (204) oben an dem Kerntriebwerk (210) befindet, wenn es an der Flugzeugzelle montiert ist.

4. Gasturbinentriebwerk (200, 200', 200") nach einem der vorhergehenden Ansprüche, wobei das Gasturbinentriebwerk ein an dem Triebwerkskern vorne montiertes Gasturbinentriebwerk oder ein an dem Lüftergehäuse vorne montiertes Gasturbinentriebwerk ist und wobei das Gasturbinentriebwerk ferner einen Pylon (205) zum Montieren des Gasturbinentriebwerks an der Flugzeugzelle umfasst, wobei sich der Pylon über den Innenraum (208) der Gabelung (204) erstreckt.

5. Gasturbinentriebwerk (200, 200', 200") nach Anspruch 4, wobei das Kabinengebläsesystem (100) durch den Pylon (205) gestützt wird.

6. Gasturbinentriebwerk (200, 200', 200") nach einem der vorhergehenden Ansprüche, wobei der mechanische Leistungsabnehmer (118) in einem Bereich von +/-45°, zum Beispiel +/-30°, des oberen Totpunkts oder des unteren Totpunkts oder bei 3 Uhr oder 9 Uhr des Triebwerkskerns (210) angeordnet ist.

7. Gasturbinentriebwerk (200, 200', 200") nach Anspruch 6, ferner umfassend ein Zusatzgetriebe des Haupttriebwerks, wobei der mechanische Leistungsabnehmer (118) eine Welle (120) umfasst, die mit dem Hauptzusatzgetriebe verbunden ist und von diesem angetrieben wird.

8. Gasturbinentriebwerk (200, 200', 200") nach einem der vorhergehenden Ansprüche, wobei der Wärmetauscher (240) einen Oberflächenkühler (242) beinhaltet, der an den Gabelungsverkleidungen (206) angeordnet ist, um von einem in dem Umgehungskanal (202) strömenden Umgehungsluftstrom umspült zu werden.

9. Gasturbinentriebwerk (200, 200', 200") nach einem der vorhergehenden Ansprüche, wobei die Gabelungsverkleidungen (206) eine Öffnung (237) umfassen, um dem Kabinengebläse (103) Lüfterumgehungsluft zuzuführen.

10. Gasturbinentriebwerk (200, 200', 200") nach einem der vorhergehenden Ansprüche, ferner umfassend ein an dem Pylon montiertes Getriebe, PMG, (250), das in dem Innenraum (208) der Gabelung (204) angeordnet ist, wobei das Kabinengebläsesystem (100) mit dem an dem Pylon montierten Getriebe verbunden ist und von diesem angetrieben wird.

11. Gasturbinentriebwerk (200, 200', 200") nach Anspruch 10, sofern abhängig von Anspruch 4, wobei:
sich das an dem Pylon montierte Getriebe (250) radial extern an dem Pylon (205) außerhalb eines Zusatzschachts des Hauptkerntriebwerks befindet, oder
sich das an dem Pylon montierte Getriebe (250) radial intern an dem Pylon (205) außerhalb eines Zusatzschachts des Hauptkerntriebwerks befindet.

12. Gasturbinentriebwerk (200, 200', 200") nach Anspruch 11, wobei sich das an dem Pylon montierte Getriebe (250) radial intern an dem Pylon (205) außerhalb eines Zusatzschachts des Hauptkerntriebwerks befindet und wobei das an dem Pylon montierte Getriebe von dem Zusatzschacht des Hauptkerntriebwerks umhüllt ist und abgeschirmt wird.

13. Luftfahrzeug, umfassend ein Gasturbinentriebwerk (200, 200', 200") gemäß einem der vorhergehenden Ansprüche.

## Revendications

1. Moteur à turbine à gaz (200, 200', 200") destiné à être monté sur un fuselage d'avion, comprenant :
un noyau de moteur (210) comprenant un compresseur, une chambre de combustion, une turbine, et un arbre central reliant la turbine au compresseur ;
une soufflante (213) située en amont du noyau de moteur, la soufflante comprenant une pluralité de pales de soufflante (214) ;
une bifurcation (204) enjambant un conduit de dérivation (202) défini entre le noyau de moteur et une nacelle (221) entourant le moteur à turbine à gaz, la bifurcation comprenant des carénages de forme aérodynamique (206) définissant un espace interne (208) entre eux ;
une prise de puissance mécanique (118) ; et
un système de ventilateur de cabine (100) conçu pour être entraîné par la prise de puissance mécanique (118, 118', 118") et comprenant :
un compresseur de ventilateur de cabine (103) conçu pour recevoir de l'air du moteur par l'intermédiaire d'une entrée d'air (108), comprimer l'air et délivrer l'air comprimé par une sortie d'air (110) ;
un variateur électrique (104) comprenant une première machine électrique (112), une seconde machine électrique (114) et un système de gestion de puissance (116) interconnectant électriquement les première et seconde machines électriques et contrôlant si chacune des première et seconde machines électriques fonctionne comme un moteur ou un générateur ; et
une boîte différentielle (106) présentant une première entrée reliée mécaniquement à la prise de puissance mécanique (118) et à un arbre de la première machine électrique (112), une seconde entrée reliée mécaniquement à un arbre de la seconde machine électrique (114), et une sortie pour entraîner le compresseur de ventilateur de cabine (103) ;
ledit système de ventilateur de cabine (100) étant disposé dans l'espace interne (208) de la bifurcation (204), et ledit moteur à turbine à gaz comprenant en outre un échangeur de chaleur (240) disposé dans l'espace interne (208) de la bifurcation (204) pour refroidir le variateur électrique (104).

2. Moteur à turbine à gaz (200, 200', 200") selon la revendication 1, comprenant en outre des aubes directrices de sortie de soufflante (203) disposées en aval de la soufflante (213), ladite bifurcation (204) étant disposée en aval des aubes directrices de sortie ou étant intégrée à celles-ci.

3. Moteur à turbine à gaz (200, 200', 200") selon l'une quelconque des revendications précédentes, ladite bifurcation (204) étant située au sommet du moteur central (210) lorsqu'il est monté sur le fuselage.

4. Moteur à turbine à gaz (200, 200', 200") selon l'une quelconque des revendications précédentes, ledit moteur à turbine à gaz étant un moteur à turbine à gaz monté à l'avant du noyau de moteur, ou un moteur à turbine à gaz monté à l'avant du carter de soufflante, et ledit moteur à turbine à gaz comprenant en outre un pylône (205) pour monter le moteur à turbine à gaz sur le fuselage, ledit pylône s'étendant à travers l'espace interne (208) de la bifurcation (204).

5. Moteur à turbine à gaz (200, 200', 200") selon la revendication 4, ledit système de ventilateur de cabine (100) étant supporté par le pylône (205).

6. Moteur à turbine à gaz (200, 200', 200") selon l'une quelconque des revendications précédentes, ladite prise de puissance mécanique (118) étant disposée dans une plage de +/-45°, par exemple +/-30°, du point mort haut, ou du point mort bas, ou à 3 heures, ou 9 heures du noyau de moteur (210).

7. Moteur à turbine à gaz (200, 200', 200") selon la revendication 6, comprenant en outre un boîtier d'entraînement d'accessoires de moteur principal, la prise de puissance mécanique (118) comprenant un arbre (120) relié au boîtier d'entraînement d'accessoires principal et entraîné par celui-ci.

8. Moteur à turbine à gaz (200, 200', 200") selon l'une quelconque des revendications précédentes, ledit échangeur de chaleur (240) comprenant un refroidisseur de surface (242) disposé sur les carénages de bifurcation (206), de manière à être lavé par un flux d'air de dérivation circulant dans le conduit de dérivation (202).

9. Moteur à turbine à gaz (200, 200', 200") selon l'une quelconque des revendications précédentes, lesdits carénages de bifurcation (206) comprenant une ouverture (237) pour alimenter en air de dérivation de soufflante le ventilateur de cabine (103).

10. Moteur à turbine à gaz (200, 200', 200") selon l'une quelconque des revendications précédentes, comprenant en outre un boîtier d'entraînement monté sur pylône, PMG (250), disposé dans l'espace interne (208) de la bifurcation (204), le système de ventilateur de cabine (100) étant relié et entraîné par le boîtier d'entraînement monté sur pylône.

11. Moteur à turbine à gaz (200, 200', 200") selon la revendication 10, lorsqu'elle dépend de la revendication 4 :
ledit boîtier d'entraînement monté sur pylône (250) étant situé radialement vers l'extérieur par rapport au pylône (205) à l'extérieur d'un compartiment d'accessoires de moteur central principal ; ou
ledit boîtier d'entraînement monté sur pylône (250) étant situé radialement vers l'intérieur par rapport au pylône (205) à l'extérieur d'un compartiment d'accessoires de moteur central principal.

12. Moteur à turbine à gaz (200, 200', 200") selon la revendication 11, ledit boîtier d'entraînement monté sur pylône (250) étant situé radialement vers l'intérieur par rapport au pylône (205) à l'extérieur d'un compartiment d'accessoires de moteur central principal, et ledit boîtier d'entraînement monté sur pylône étant encastré et protégé par rapport au compartiment d'accessoires de moteur central principal.

13. Aéronef comprenant un moteur à turbine à gaz (200, 200', 200") selon l'une quelconque des revendications précédentes.
